# EUROPÄISCHE PATENTSCHRIFT

(11) **EP 3 385 596 B1**
(45) Veröffentlichungstag und Bekanntmachung des Hinweises auf die Patenterteilung: **09.12.2020**
(21) Anmeldenummer: 17164994.0
(22) Anmeldetag: 05.04.2017
(51) Int. Cl.: F16P 3/08

(54) **SICHERHEITSEINRICHTUNG**
SAFETY DEVICE
DISPOSITIF DE SÉCURITÉ

(43) Veröffentlichungstag der Anmeldung: 10.10.2018
(73) Patentinhaber: EUCHNER GmbH + Co. KG, 70771 Leinfelden-Echterdingen (DE)
(72) Erfinder: Mailänder, Joachim, 70199 Stuttgart (DE); Albrecht, Sören, 70563 Stuttgart (DE); Kraus, Matthias, 73760 Ostfildern (DE); Grimm, Ilo, 71111 Waldenbuch (DE)
(74) Vertreter: Ruckh, Rainer Gerhard

(56) Entgegenhaltungen:
- EP-A1- 3 128 220
- EP-A2- 1 795 676
- DE-A1- 10 252 025
- DE-A1-102012 111 342
- JP-A- 2008 186 757

## Beschreibung

Die Erfindung betrifft eine Sicherheitseinrichtung.

Derartige Sicherheitseinrichtungen umfassen einen Sicherheitsschalter und einen relativ zum Sicherheitsschalter beweglich angeordneten Betätiger. Die so ausgebildete Sicherheitseinrichtung wird allgemein im Bereich der Sicherheitstechnik eingesetzt. Ein Beispiel für einen derartigen Einsatz im Bereich der Sicherheitstechnik ist eine Zugangsabsicherung zu einem Gefahrenbereich, wobei der Zugang mit einer Schutztür verschlossen werden kann. In diesem Fall ist der Betätiger typischerweise an der Schutztür angeordnet, während der Sicherheitsschalter an einer den Zugang begrenzenden Rahmenkonstruktion angeordnet ist.

Bekannte Sicherheitsschalter weisen ein RFID-System mit einem im Betätiger integrierten Transponder und einer im Sicherheitsschalter integrierten Leseeinheit auf. Mit diesem RFID-System kann die Schließstellung der Schutztür kontrolliert werden. Nur wenn sich die Tür in der Schließstellung befindet, ist der Transponder im Betätiger der Leseeinheit im Sicherheitsschalter räumlich so zugeordnet, dass Transpondersignale des Transponders von der Leseeinheit empfangen werden.

Darüber hinaus kann mit der Sicherheitseinrichtung die Schutztür in ihrer Schließstellung gesichert werden. Hierzu weist der Sicherheitsschalter typischerweise ein Zuhalteelement in Form eines Zuhaltebolzens auf, der dann, wenn sich die Schutztür in der Schließstellung befindet, in eine Aufnahme, insbesondere Ausnehmung im Betätiger, eingefahren werden kann, wodurch eine Zuhaltung der Schutztür bewirkt ist.

Ein Problem bei derartigen Sicherheitseinrichtungen kann darin bestehen, dass der Betätiger in eine Position derart eingebracht werden kann, dass zwar das RFID-System noch eine Schließstellung der Schutztür signalisiert, der Zuhaltebolzen jedoch aus der Aufnahme des Betätigers gelöst ist. Der Sicherheitsschalter meldet dann einen zugehaltenen Zustand der Schutztür, obwohl dies nicht den tatsächlichen Verhältnissen entspricht.

Die EP 1 795 676 A2 betrifft einen Sicherheitsschalter zum Erzeugen eines Freigabesignals in Abhängigkeit von der Position einer beweglichen Schutztür. Der Sicherheitsschalter beinhaltet ein Türteil und ein Rahmenteil. Das Türteil weist einen Betätiger auf, der zwischen einer ersten und einer zweiten Position verstellbar ist. Das Rahmenteil besitzt eine Ausnehmung, in die der Betätiger in der zweiten Position eingreifen kann. Ferner ist ein Sperrglied vorgesehen, um den Betätiger in der zweiten Position zu blockieren. Außerdem ist ein Sensor vorhanden, der dazu ausgebildet ist, zumindest eine der Positionen des Betätigers eindeutig zu detektieren, um in Abhängigkeit davon das Freigabesignal zu erzeugen. Gemäß einem Aspekt der Erfindung ist das Sperrglied an dem Türteil angeordnet.

Die DE 102 52 025 A1 betrifft ein Schloss mit einem Gehäuse, einem Riegel und einer Zuhaltung zum Arretieren des Riegels in seiner Schließstellung. Das Schloss weist eine Sensoreinrichtung zum Überwachen der Schließstellung des Riegels auf. Diese Sensoreinrichtung umfasst einen ersten Transponder, der an dem Riegel befestigt ist und durch den ein erstes Identifizierungssignal aussendbar ist. Die Sensoreinrichtung umfasst ferner einen zweiten Transponder, der an der Zuhaltung befestigt ist und durch den ein zweites Identifizierungssignal aussendbar ist. Schließlich weist die Sensoreinrichtung einen Abfragekopf auf, der derart gehäusefest gegenüber dem Riegel und der Zuhaltung angeordnet ist, dass er das erste und das zweite Identifizierungssignal nur dann sowohl von dem ersten als auch von dem zweiten Transponder empfangen kann, wenn sich der Riegel in seiner Schließstellung befindet und durch die Zuhaltung arretiert ist.

Die EP 3 128 220 A1 betrifft ein Sicherheitssystem für eine trennende Schutzeinrichtung mit einem ersten Überwachungsmittel zur Überwachung, ob die trennende Schutzeinrichtung mittels einer Verriegelung verriegelt ist und mit einem zweiten Überwachungsmittel zur Erfassung der Stellung der trennenden Schutzeinrichtung. Das zweite Überwachungsmittel weist einen vom ersten Überwachungsmittel verschiedenen, richtungsabhängige Signale generierenden Sensor auf.

Die DE 10 2012 111 342 A1 betrifft ein Schutztürüberwachungssystem mit einer Schutztür als Zugang zu einem Sicherheitsbereich und mit einem Schutztürüberwachungsmodul zur Überwachung eines Zustands der Schutztür. Das Schutztürüberwachungsmodul weist einen Betätiger und einen Sensor auf, welche elektrisch kontaktlos in Wechselwirkung miteinander bringbar sind und dadurch ein Schutztürsignal erzeugen. Des Weiteren weist das Schutztürüberwachungssystem eine Steuerungseinheit auf, welche dazu eingerichtet ist, das Schutztürsignal auszulesen und eine im Sicherheitsbereich befindliche Maschine oder Anlage in Abhängigkeit des Schutztürsignals zu steuern. Zudem ist eine Verriegelungseinrichtung mit einem Grundkörper und einem daran angeordneten Verriegelungshebel vorgesehen. Der Verriegelungshebel ist gegenüber dem Grundkörper aus einer Freigabestellung in eine Sperrstellung bringbar, in welcher der Verriegelungshebel die elektrisch kontaktlose Wechselwirkung zwischen dem Betätiger und dem Sensor verhindert, wobei die Verriegelungseinrichtung eine Aufnahme für ein abschließbares Sicherungsteil aufweist, welches, in die Aufnahme eingeführt, den Verriegelungshebel in seiner Sperrstellung hält.

Die JP 2008186757 A betrifft eine Verschlussvorrichtung für einen Sicherheitsschalter. Die Verschlussvorrichtung umfasst einen L-förmigen Riegel, der durch ein Loch im Sicherheitsschalter geschoben wird und dann mit einem Schloss gesichert wird.

Der Erfindung liegt die Aufgabe zugrunde, eine Sicherheitseinrichtung der eingangs genannten Art bereitzustellen, welche bei geringem konstruktivem Aufwand eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft eine Sicherheitseinrichtung mit einem Sicherheitsschalter und einem relativ zu diesem beweglich angeordneten Betätiger. In dem Betätiger sind ein Transponder und in dem Sicherheitsschalter eine Leseeinheit angeordnet. Eine Schließstellung des Betätigers ist dadurch kontrolliert, dass Transpondersignale des Transponders in der Leseeinheit erfasst werden. Der Sicherheitsschalter weist ein Zuhalteelement mit einem Beeinflussungselement auf. Der Betätiger weist einen mit dem Transponder gekoppelten Sensor auf. In der Schließstellung des Betätigers ist das Zuhalteelement in eine Aufnahme des Betätigers einführbar. Dadurch ist eine Zuhaltung des Betätigers bewirkt. Diese Zuhaltung ist dadurch kontrolliert, dass nur bei in die Aufnahme eingeführtem Zuhalteelement das Beeinflussungselement im Einflussbereich des Sensors ist. Dieser generiert ein Sensorsignal, mittels dessen die vom Transponder gesendeten Transpondersignale geändert werden. Die geänderten Transpondersignale werden in der Leseeinheit erfasst.

Die erfindungsgemäße Sicherheitseinrichtung weist eine hohe Funktionssicherheit auf. Durch die im Sicherheitsschalter integrierte Leseeinheit und den im Betätiger integrierten Transponder kann kontrolliert werden, ob sich der Betätiger in seiner Schließstellung befindet, da in dieser Schließstellung Transpondersignale des Transponder von der Leseeinheit empfangen und gelesen werden. Weiterhin wird mit der Sicherheitseinrichtung eine Zuhaltung derart realisiert, dass dann, wenn sich der Betätiger in der Schließstellung befindet, das Zuhalteelement des Sicherheitsschalters in eine Aufnahme des Betätigers eingeführt ist.

Erfindungsgemäß wird diese Zuhaltung mit dem im Zuhalteelement integrierten Beeinflussungselement und dem im Betätiger integrierten Sensor kontrolliert und überwacht, wodurch die Sicherheitseinrichtung sicher gegen Manipulationen ist. Wird mit dem Sensor registriert, dass keine Zuhaltung gegeben ist, so kann der Sicherheitsschalter ein entsprechendes Ausgangssignal generieren, so dass ein unsicherer, gefahrenbringender Zustand vermieden wird.

Ein wesentlicher Vorteil der Erfindung besteht darin, dass der Sensor mit dem Transponder so gekoppelt ist, dass der Sensor die Transpondersignale in charakteristischer Weise beeinflusst. Damit kann das RFID-System nicht nur zur Kontrolle der Schließstellung des Betätigers genutzt werden. Vielmehr kann dieses auch zur Überwachung der Zuhaltung mitgenutzt werden, wodurch der Aufwand für die Überwachung der Zuhaltung gering gehalten werden kann.

Ein wesentlicher Vorteil besteht darin, dass der Sensor und das Beeinflussungselement eine berührungslos arbeitende Einheit bilden, so dass diese Einheit verschleißfrei arbeitet.

Dabei ist insbesondere vorteilhaft, dass der Sensor im Betätiger so ausgebildet ist, dass dieser entweder keine elektrische Spannungsversorgung benötigt oder die Spannungsversorgung über den Transponderschwingkreis des Transponders erfolgen kann. Weiterhin ist vorteilhaft, dass das Beeinflussungselement ein passives Element derart ist, dass dieses keine elektrischen Anschlüsse benötigt. Somit entfallen aufwändige elektrische Zuleitungen vom Sicherheitsschalter zu dem im relativ zum Sicherheitsschalter beweglichen Zuhalteelement gelagerten Beeinflussungselement.

Die Sicherheitseinrichtung weist somit einen sehr kompakten und robusten Aufbau auf.

Besonders vorteilhaft weist der Transponder wenigstens einen Transponderchip und eine Transponderspule als Bestandteil eines Transponderschwingkreises auf. Mit dem Transponder werden kodierte Transpondersignale generiert.

Gemäß einer ersten Variante ist der Sensor Bestandteil des Transponderschwingkreises. Durch das in den Einflussbereich des Sensors eingebrachte Beeinflussungselement ist die Resonanzfrequenz des Transponderschwingkreises geändert.

Die Funktionsweise des Sensors zur Überwachung der Zuhaltung ist dann derart, dass die Leseeinheit Transpondersignale des Transponders auf einer ersten Trägerfrequenz empfängt, wenn das Zuhalteelement nicht in die Aufnahme des Betätigers eingeführt ist. Auf einer zweiten Trägerfrequenz empfängt die Leseeinheit Transpondersignale des Transponders, wenn das Zuhalteelement in die Aufnahme des Betätigers eingeführt und die Resonanzfrequenz des Transponderschwingkreises durch das Beeinflussungselement geändert ist.

Durch die so bewirkte Beeinflussung des Transponderschwingkreises kann die Zuhaltung des Betätigers einfach und sicher überwacht werden.

In diesem Fall kann der Sensor von einer Spule gebildet sein und das Beeinflussungselement des Zuhalteelements von einem magnetischen Material. Beispielsweise kann die Spule einen Ferritkern aufweisen, der durch das aus magnetischem Material bestehende Beeinflussungselement gesättigt wird, wenn das Zuhalteelement in die Aufnahme eingeführt ist und somit im Einflussbereich der Spule ist.

Die Spule bildet somit einen sehr einfachen Sensor, der keine eigene Spannungsversorgung benötigt. Das Beeinflussungselement kann einfach dadurch gebildet werden, dass das Zuhalteelement selbst aus einem magnetischen Material besteht oder ein entsprechendes magnetisches Material im Zuhalteelement angeordnet ist. In jedem Fall bildet das Beeinflussungselement ein passives Element derart, dass für dieses keine elektrischen Anschlüsse vorgesehen sein müssen.

Alternativ kann der Sensor von einem Kondensator gebildet sein. In diesem Fall besteht das Beeinflussungselement aus einem dielektrischen Material, das die Kapazität des Kondensators ändert, wenn sich das Beeinflussungselement im Einflussbereich des Sensors befindet.

Gemäß einer zweiten Variante weist der Transponder einen Transponderchip mit einer Logikeinheit auf. Der Sensor ist an einen Eingang des Transponderchips angeschlossen. Von dem vom Beeinflussungselement beeinflussten Sensor generiert dieser ein Sensorsignal, mittels dessen im Transponderchip eine Umschaltung von Codes, die über den Transponder zur Leseeinheit übertragen werden, erfolgt.

Durch die Unterscheidung der vom Transponder gesendeten Codes kann in der Leseeinheit einfach und sicher festgestellt werden, ob eine Zuhaltung vorliegt oder nicht.

Besonders vorteilhaft generiert der Sensor ein binäres Ausgangssignal, das dem Transponder zugeführt wird. Abhängig davon, ob das Beeinflussungselement im Einflussbereich des Sensors ist, nimmt dessen Ausgangssignal einen definierten Schaltzustand an, anhand dessen im Transponderchip die Auswahl des jeweiligen Codes erfolgt.

Besonders vorteilhaft ist der Sensor ein Näherungsschalter. Der Sensor kann prinzipiell als optischer oder kapazitiver Näherungsschalter und vorteilhaft als induktiver Näherungsschalter ausgebildet sein. Das zugeordnete Beeinflussungselement weist eine dementsprechende Materialbeschaffenheit auf, so dass der Näherungsschalter bei Annähern oder Entfernen des Beinflussungselement sein Ausgangssignal in definierter Weise ändert.

Gemäß einer dritten Variante weist der Transponder zwei Transponderchips auf, die jeweils mit dem Sensor verbunden sind, wobei in den Transponderchip unterschiedliche Codes gespeichert sind. Falls das Beeinflussungselement des Zuhalteelements außerhalb des Einflussbereichs des Sensors angeordnet ist, wird mittels des Sensors ein erster Transponderchip ausgewählt, so dass dessen Codes als Transpondersignale zur Leseeinheit übertragen werden. Falls das Beeinflussungselement des Zuhalteelements im Einflussbereich des Sensors angeordnet ist, wird mittels des Sensors der zweite Transponderchip ausgewählt, so dass dessen Codes als Transpondersignale zur Leseeinheit übertragen werden.

Vorteilhaft ist in diesem Fall der Sensor ein Schaltelement, welches ein binäres Schaltsignal generiert, wobei in Abhängigkeit der Schaltzustände des Schaltsignals einer der Transponderchips ausgewählt ist.

Dieses Schaltelement kann beispielsweise von einem Reed-Kontakt gebildet sein. In diesem Fall ist das zugeordnete Beeinflussungselement von einem Magneten gebildet. Vorteilhaft hierbei ist, dass der Reed-Kontakt keine elektrische Spannungsversorgung benötigt. Alternativ kann das Schaltelement von einem kapazitiven MEMS-Sensor oder von einem Hallsensor gebildet sein. Die Spannungsversorgung erfolgt jeweils über den Transponderschwingkreis.

Die Erfindung wird im Folgenden anhand der Zeichnungen erläutert. Es zeigen:
- Fig. 1:: Erstes Ausführungsbeispiel der erfindungsgemäßen Sicherheitseinrichtung.
- Fig. 2:: Zweites Ausführungsbeispiel der erfindungsgemäßen Sicherheitseinrichtung.
- Fig. 3:: Drittes Ausführungsbeispiel der erfindungsgemäßen Sicherheitseinrichtung.

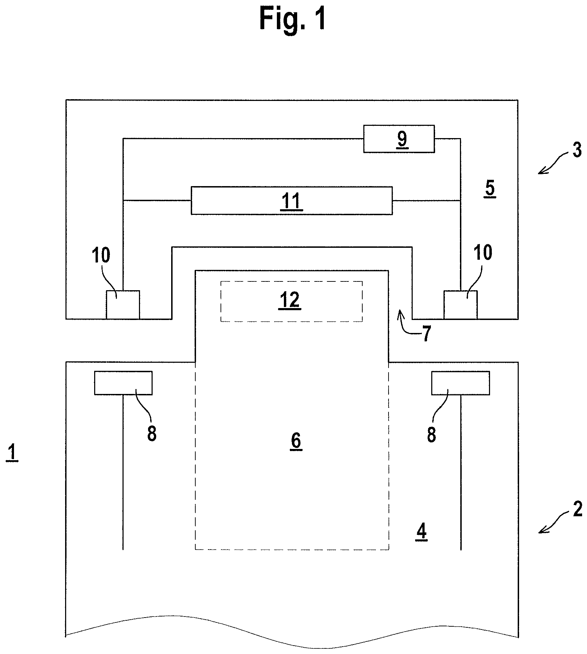

Die Figuren 1 bis 3 zeigen unterschiedliche Ausführungsformen der erfindungsgemäßen Sicherheitseinrichtung 1, die einen Sicherheitsschalter 2 und einen relativ zum Sicherheitsschalter 2 beweglichen Betätiger 3 aufweist.

Mit dieser Sicherheitseinrichtung 1 erfolgt beispielsweise die Sicherung einer Schutztür als Zugang zu einem Gefahrenbereich. Der Betätiger 3 kann dann an der Schutztür angeordnet sein, der Sicherheitsschalter 2 kann an einem die Türöffnung begrenzenden Rahmen angeordnet werden.

Mit der Sicherheitseinrichtung 1 wird einerseits die Schließstellung der Schutztür kontrolliert, wobei sich die Schutztür dann in ihrer Schließstellung befindet, wenn der Betätiger 3 in einer entsprechenden Schließstellung am Sicherheitsschalter 2 liegt. Weiterhin wird mit der Sicherheitseinrichtung 1 eine Zuhaltung der Schutztür in ihrer Schließstellung bewirkt.

Die Ausführungsbeispiele gemäß der Figuren 1 bis 3 zeigen den Betätiger 3 in seiner Schließstellung, in welcher der Betätiger 3 dem Sicherheitsschalter 2 gegenüberliegt. Diese Schließstellung wird durch ein RFID-System überwacht, das generell eine im Sicherheitsschalter 2 angeordnete Leseeinheit 4 und einen im Betätiger 3 angeordneten Transponder 5 aufweist.

Der Sicherheitsschalter 2 weist ein Zuhalteelement 6 in Form eines Zuhaltebolzens auf. Der Betätiger 3 weist korrespondierend hierzu eine Aufnahme 7 in Form einer Ausnehmung auf. Das Zuhalteelement 6 kann mittels eines nicht dargestellten Antriebs in axialer Richtung des Sicherheitsschalters 2 zwischen einer Freigabestellung und einer Sperrstellung verfahren werden. In der Freigabestellung ist das Zuhalteelement 6 komplett in den Sicherheitsschalter 2 eingefahren. Befindet sich der Betätiger 3 in seiner Schließstellung, kann das Zuhalteelement 6, wie in den Figuren 1 bis 3 dargestellt, in die Sperrstellung ausgefahren werden, so dass das Zuhalteelement 6 in die Aufnahme 7 des Betätigers 3 eingeführt ist, wodurch die Zuhaltung bewirkt wird.

Die Leseeinheit 4 des RFID-Systems weist eine Lesespule 8 im Bereich der dem Betätiger 3 zugewandten Stirnfläche des Sicherheitsschalters 2 auf. Die Lesespule 8 ist an eine nicht dargestellte Auswerteeinheit als weiterem Bestandteil der Leseeinheit 4 angeschlossen.

Der Transponder 5 des Betätigers 3 gemäß Figur 1 weist einen Transponderchip 9 und eine Transponderspule 10 auf, die Bestandteil eines Transponderschwingkreises ist. Der Transponderschwingkreis weist weiterhin einen nicht dargestellten Kondensator auf. Die Transponderspule 10 befindet sich im Bereich der dem Sicherheitsschalter 2 zugewandten Stirnseite des Betätigers 3.

In der Schließstellung des Betätigers 3 liegt dieser dem Sicherheitsschalter 2 gegenüber. Somit kann die Leseeinheit 4 des Sicherheitsschalters 2 kodierte Transpondersignale des Transponders 5 empfangen, wodurch die Schließstellung des Betätigers 3 erkannt wird.

Erfindungsgemäß ist in dem Transponderschwingkreis ein Sensor 11 vorgesehen, mit dem die Zuhaltung, die mit dem Zuhalteelement 6 bewirkt ist, überwacht werden kann. Diesem Sensor 11 ist ein Beeinflussungselement 12 im Zuhalteelement 6 zugeordnet. Der Sensor 11 und das Beeinflussungselement 12 bilden eine berührungslos arbeitende Einheit.

Bei der Ausführungsform gemäß Figur 1 ist der Sensor 11 von einer Spule gebildet, die vorzugsweise einen Ferritkern aufweist. Der als Spule ausgebildete Sensor 11 benötigt keine elektrische Spannungsversorgung. Das Beeinflussungselement 12 ist von einem magnetischen Material gebildet. Dabei kann das Beeinflussungselement 12 Bestandteil des Zuhalteelements 6 sein oder als separates Element im Zuhalteelement 6 integriert sein. In jedem Fall benötigt dieses Beeinflussungselement 12 keine elektrischen Anschlüsse, das heißt es müssen keine Leitungen vom stationären Sicherheitsschalter 2 zum beweglichen Zuhalteelement 6 geführt werden.

Befindet sich das Zuhalteelement 6 mit dem Beeinflussungselement 12 in seiner Freigabestellung, so ist das Beeinflussungselement 12 außerhalb des Einflussbereichs des Sensors 11, so dass die Resonanzfrequenz des Transponderschwingkreises nicht durch diesen beeinflusst ist. In diesem Fall empfängt die Leseeinheit 4 auf einer ersten Trägerfrequenz die Signale des Transponders 5, wobei diese einen durch den Transponderchip 9 vorgegebenen Code enthalten.

Wird nun das Zuhalteelement 6 in seine Sperrstellung eingefahren, liegt das Zuhalteelement 6 in der Aufnahme 7 des Betätigers 3. Damit liegt das Beeinflussungselement 12 im Einflussbereich des Sensors 11, das heißt der Spule. Der Ferritkern der Spule wird durch das magnetische Material des Beeinflussungselement 12 gesättigt, wodurch die Resonanzfrequenz des Transponderschwingkreises geändert wird. Dies hat zur Folge, dass die Leseeinheit 4 die Transpondersignale auf der ersten Trägerfrequenz nicht mehr erkennt. Daher schaltet die Leseeinheit 4 auf eine an die geänderte Resonanzfrequenz angepasste andere Trägerfrequenz um und kann dann die Transpondersignale des Transponders 5 erkennen. Durch diese Umschaltung wird die Zuhaltung mit dem Zuhalteelement 6 sicher erkannt und überwacht.

Alternativ kann der Sensor 11 auch aus einem Kondensator bestehen, da auch mit diesem die Resonanzfrequenz des Transponderschwingkreises geändert werden kann. Das Beeinflussungselement 12 besteht dann aus einem dielektrischen oder metallisch leitfähigem Material.

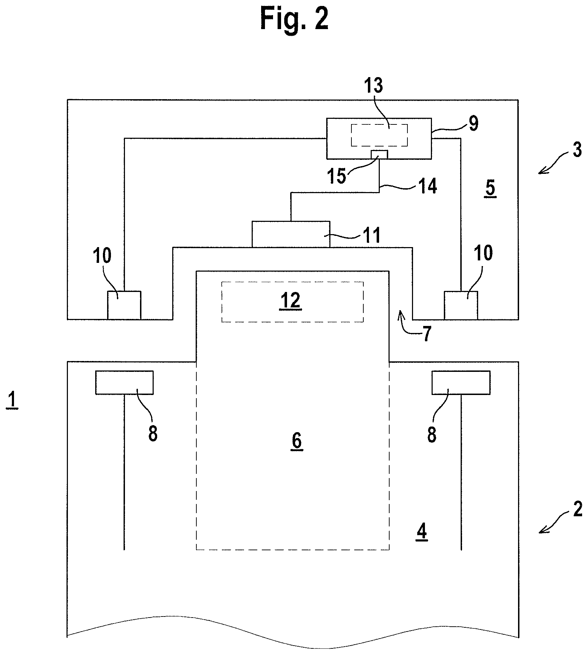

Figur 2 zeigt ein zweites Ausführungsbeispiel der erfindungsgemäßen Sicherheitseinrichtung 1. Diese Sicherheitseinrichtung 1 unterscheidet sich von der Ausführungsform gemäß Figur 1 nur hinsichtlich der Ausbildung des Sensors 11 und dessen Anbindung an den Transponder 5.

Bei dem Ausführungsbeispiel gemäß Figur 2 weist der Transponderchip 9 im Gegensatz zur Ausführungsform der Figur 1 eine Logikeinheit 13 auf. Prinzipiell kann der Transponderchip 9 dann von einem Mikroprozessor oder dergleichen gebildet sein. Der Sensor 11 ist im vorliegenden Fall als binär schaltender Sensor 11, insbesondere als Näherungsschalter ausgebildet, wobei besonders vorteilhaft ein induktiver Näherungsschalter zum Einsatz kommt. Daran angepasst besteht das Beeinflussungselement 12 aus einem mit dem Näherungsschalter metallischen Material. Der Sensor 11 ist über eine Zuleitung 14 an einen Eingang 15 des Transponderchips 9 angeschlossen. Prinzipiell kann auch ein kapazitiver oder optischer Näherungsschalter verwendet werden.

Befindet sich das Zuhalteelement 6 in der Freigabestellung, ist das Beeinflussungselement 12 außerhalb des Einflussbereichs des Näherungsschalters, so dass dessen Ausgangssignal einen ersten Schaltzustand annimmt. Der Transponderchip 9 erzeugt dann einen ersten Code der mittels der Transponderspule 10 als Transpondersignal an die Leseeinheit 4 übertragen wird. Wird das Zuhalteelement 6 in die Schließstellung eingefahren, befindet sich das Beeinflussungselement 12 im Einflussbereich des Sensors 11, das heißt des Näherungsschalters, so dass sich der Schaltzustand des Sensors 11 ändert. Diese Schaltzustandsänderung wird über den Eingang 15 in den Transponderchip 9 eingelesen, wodurch dieser den Code, der über die Transponderspule 10 an die Leseeinheit 4 gesendet wird, ändert, das heißt umschaltet. Diese Codeumschaltung wird in der Leseeinheit 4 erkannt, wodurch die Zuhaltung sicher erkannt und überwacht wird.

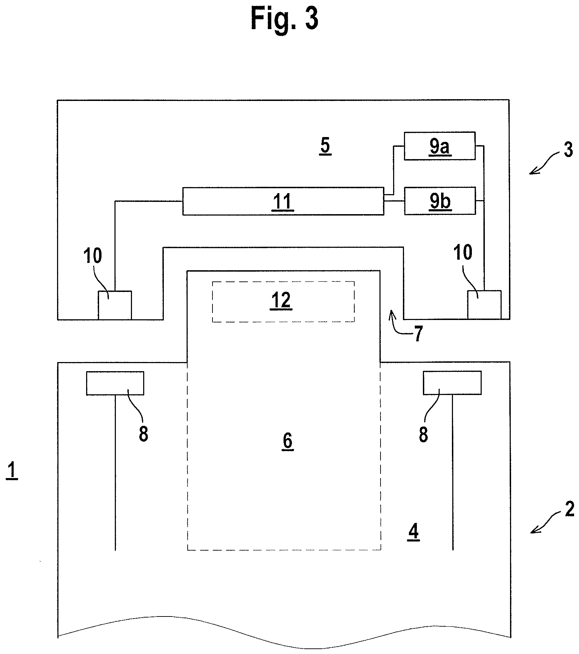

Figur 3 zeigt ein drittes Ausführungsbeispiel der erfindungsgemäßen Sicherheitseinrichtung 1. Auch diese Sicherheitseinrichtung 1 unterscheidet sich von der Ausführungsform gemäß Figur 1 nur hinsichtlich der Ausbildung des Sensors 11 und dessen Anbindung an den Transponder 5.

Bei der Ausführungsform der Figur 3 ist der Sensor 11 ein Schaltelement, wobei im vorliegenden Fall ein Reed-Kontakt zum Einsatz kommt. Prinzipiell kann der Sensor 11 auch von einem Hallsensor oder MEMS-Sensor gebildet sein.

Angepasst an die Ausbildung des Sensors 11 in Form eines Reed-Kontakts besteht das Beeinflussungselement 12 aus einem Magneten.

Im vorliegenden Fall weist der Transponder 5 zwei Transponderchips 9a, 9b auf, wobei mit dem ersten Transponderchip 9a ein erster Code und mit dem zweiten Transponderchip 9b ein zweiter Code zur Übertragung kodierter Transpondersignale vorgegeben werden kann. Der Sensor 11 ist in den Transponderschwingkreis eingebunden und an die beiden Transponderchips 9a, 9b angeschlossen.

Befindet sich das Zuhalteelement 6 in seiner Freigabestellung, so ist das Beeinflussungselement 12 außerhalb des Einflussbereichs des den Sensor 11 bildenden Reed-Kontakts. Der Reed-Kontakt aktiviert dann den ersten Transponderchip 9a, so dass dessen Code das Transpondersignal kodiert, das dann in der Leseeinheit 4 registriert wird. Befindet sich das Zuhalteelement 6 in seiner Schließstellung, so ist das Beeinflussungselement 12 im Einflussbereich des Reed-Kontakts, sodass dessen Schaltsignal geändert wird, wodurch nun der zweite Transponderchip 9b aktiviert wird, so dass dessen Code das Transpondersignal kodiert, das dann in der Leseeinheit 4 registriert wird. Durch diese Codeumschaltung kann die Zuhaltung sicher erfasst und überwacht werden.

### Bezugszeichenliste

- (1): Sicherheitseinrichtung
- (2): Sicherheitsschalter
- (3): Betätiger
- (4): Leseeinheit
- (5): Transponder
- (6): Zuhalteelement
- (7): Aufnahme
- (8): Lesespule
- (9): Transponderchip
- (9a): Erster Transponderchip
- (9b): Zweiter Transponderchip
- (10): Transponderspule
- (11): Sensor
- (12): Beeinflussungselement
- (13): Logikeinheit
- (14): Zuleitung
- (15): Eingang

## Patentansprüche

1. Sicherheitseinrichtung (1) mit einem Sicherheitsschalter (2) und einem relativ zu diesem beweglich angeordneten Betätiger (3), wobei in dem Betätiger (3) ein Transponder (5) und in dem Sicherheitsschalter (2) eine Leseeinheit (4) angeordnet sind, wobei eine Schließstellung des Betätigers (3) dadurch kontrolliert ist, dass Transpondersignale des Transponders (5) in der Leseeinheit (4) erfasst werden, **dadurch gekennzeichnet, dass** der Sicherheitsschalter (2) ein Zuhalteelement (6) mit einem Beeinflussungselement (12) aufweist und der Betätiger (3) einen mit dem Transponder (5) gekoppelten Sensor (11) aufweist, dass in der Schließstellung des Betätigers (3) das Zuhalteelement (6) in eine Aufnahme (7) des Betätigers (3) einführbar ist, wodurch eine Zuhaltung des Betätigers (3) bewirkt ist, und dass diese Zuhaltung dadurch kontrolliert ist, dass nur bei in die Aufnahme (7) eingeführtem Zuhalteelement (6) das Beeinflussungselement (12) im Einflussbereich des Sensors (11) ist, so dass dieser ein Sensorsignal generiert, mittels dessen die vom Transponder (5) gesendeten Transpondersignale geändert werden, wobei die geänderten Transpondersignale in der Leseeinheit (4) erfasst werden.

2. Sicherheitseinrichtung (1) nach Anspruch 1, **dadurch gekennzeichnet, dass** der Transponder (5) wenigstens einen Transponderchip (9) und eine Transponderspule (10) als Bestandteil eines Transponderschwingkreises aufweist, wobei mit dem Transponder (5) kodierte Transpondersignale generiert werden.

3. Sicherheitseinrichtung (1) nach Anspruch 2, **dadurch gekennzeichnet, dass** der Sensor (11) Bestandteil des Transponderschwingkreises ist, wobei durch das in den Einflussbereich des Sensors (11) eingebrachte Beeinflussungselement (12) die Resonanzfrequenz des Transponderschwingkreises geändert ist.

4. Sicherheitseinrichtung (1) nach Anspruch 3, **dadurch gekennzeichnet, dass** die Leseeinheit (4) Transpondersignale des Transponders (5) auf einer ersten Trägerfrequenz empfängt, wenn das Zuhalteelement (6) nicht in die Aufnahme (7) des Betätigers (3) eingeführt ist, und dass die Leseeinheit (4) des Transponders (5) auf einer zweiten Trägerfrequenz Transpondersignale des Transponders (5) empfängt, wenn das Zuhalteelement (6) in die Aufnahme (7) des Betätigers (3) eingeführt ist und die Resonanzfrequenz des Transponderschwingkreises durch das Beeinflussungselement (12) geändert ist.

5. Sicherheitseinrichtung (1) nach Anspruch 4, **dadurch gekennzeichnet, dass** der Sensor (11) von einer Spule gebildet ist und das Beeinflussungselement (12) des Zuhalteelements (6) von einem magnetischen Material gebildet ist.

6. Sicherheitseinrichtung (1) nach Anspruch 5, **dadurch gekennzeichnet, dass** der Sensor (11) von einem Kondensator gebildet ist.

7. Sicherheitseinrichtung (1) nach Anspruch 2, **dadurch gekennzeichnet, dass** der Transponder (5) einen Transponderchip (9) mit einer Logikeinheit (13) aufweist, und dass der Sensor (11) an einen Eingang (15) des Transponderchips (9) angeschlossen ist, wobei bei von dem Beeinflussungselement (12) beeinflussten Sensor (11) dieser ein Sensorsignal generiert, mittels dessen im Transponderchip (9) eine Umschaltung von Codes, die über den Transponder (5) zur Leseeinheit (4) übertragen werden, erfolgt.

8. Sicherheitseinrichtung (1) nach Anspruch 7, **dadurch gekennzeichnet, dass** der Sensor (11) ein Näherungsschalter ist.

9. Sicherheitseinrichtung (1) nach Anspruch 2, **dadurch gekennzeichnet, dass** der Transponder (5) zwei Transponderchips (9a, 9b) aufweist, die jeweils mit dem Sensor (11) verbunden sind, wobei in den Transponderchips (9a, 9b) unterschiedliche Codes gespeichert sind, und dass, falls das Beeinflussungselement (12) des Zuhalteelements (6) außerhalb des Einflussbereichs des Sensors (11) angeordnet ist, mittels des Sensors (11) ein erster Transponderchip (9a) ausgewählt ist, so dass dessen Codes als Transpondersignale zur Leseeinheit (4) übertragen werden, und dass, falls das Beeinflussungselement (12) des Zuhalteelements (6) im Einflussbereich des Sensors (11) angeordnet ist, mittels des Sensors (11) der zweite Transponderchip (9b) ausgewählt ist, so dass dessen Codes als Transpondersignale zur Leseeinheit (4) übertragen werden.

10. Sicherheitseinrichtung (1) nach Anspruch 9, **dadurch gekennzeichnet, dass** der Sensor (11) ein Schaltelement ist, welches ein binäres Schaltsignal generiert, wobei in Abhängigkeit der Schaltzustände des Schaltsignals einer der Transponderchips (9a, 9b) ausgewählt ist.

11. Sicherheitseinrichtung (1) nach Anspruch 10, **dadurch gekennzeichnet, dass** das Schaltelement ein Reed-Kontakt, ein MEMS-Schalter oder ein Hallsensor ist.

12. Sicherheitseinrichtung (1) nach einem der Ansprüche 1 bis 11, **dadurch gekennzeichnet, dass** der Sensor (11) und das Beeinflussungselement (12) eine berührungslos arbeitende Einheit bilden.

13. Sicherheitseinrichtung (1) nach einem der Ansprüche 1 bis 12, **dadurch gekennzeichnet, dass** das Beeinflussungselement (12) ein passives Element ohne elektrische Anschlüsse ist.

14. Sicherheitseinrichtung (1) nach einem der Ansprüche 1 bis 12, **dadurch gekennzeichnet, dass** das Zuhalteelement (6) mittels eines Antriebs im Sicherheitsschalter (2) verfahrbar angeordnet ist.

## Claims

1. Safety device (1) with a safety switch (2) and an actuator (3) arranged movably relative to the latter, wherein a transponder (5) is arranged in the actuator (3) and a reading unit (4) is arranged in the safety switch (2), wherein a closing position of the actuator (3) is thereby controlled, in that transponder signals of the transponder (5) are detected in the reading unit (4), **characterised in that** the safety switch (2) has a locking element (6) with an influencing element (12) and the actuator (3) has a sensor (11) coupled to the transponder (5), **in that**, in the closed position of the actuator (3), the guard locking element (6) can be inserted into a receptacle (7) of the actuator (3), as a result of which guard locking of the actuator (3) is effected, and **in that** this guard locking is thereby controlled, **in that** the influencing element (12) is within the sphere of influence of the sensor (11) only when the locking element (6) is inserted into the receptacle (7), so that the latter generates a sensor signal by means of which the transponder signals transmitted by the transponder (5) are changed, the changed transponder signals being detected in the reading unit (4).

2. The safety device (1) according to claim 1, **characterised in that** the transponder (5) comprises at least one transponder chip (9) and a transponder coil (10) as a component of a transponder resonant circuit, wherein transponder signals encoded with the transponder (5) are generated.

3. The safety device (1) according to claim 2, **characterised in that** the sensor (11) is part of the transponder oscillating circuit, wherein the resonant frequency of the transponder resonant circuit is changed by the influencing element (12) brought into the area of influence of the sensor (11).

4. The safety device (1) according to claim 3, **characterised in that** the reading unit (4) receives transponder signals of the transponder (5) on a first carrier frequency when the locking element (6) is not inserted into the receptacle (7) of the actuator (3), and **in that** the reading unit (4) of the transponder (5) receives transponder signals of the transponder (5) on a second carrier frequency when the locking element (6) is inserted into the receptacle (7) of the actuator (3) and the resonant frequency of the transponder resonant circuit is changed by the influencing element (12).

5. The safety device (1) according to claim 4, **characterised in that** the sensor (11) is formed by a coil and the influencing element (12) of the locking element (6) is formed by a magnetic material.

6. The safety device (1) according to claim 5, **characterised in that** the sensor (11) is formed by a capacitor.

7. The safety device (1) according to claim 2, **characterised in that** the transponder (5) has a transponder chip (9) with a logic unit (13), and **in that** the sensor (11) is connected to an input (15) of the transponder chip (9), wherein, when the sensor (11) is influenced by the influencing element (12), the latter generates a sensor signal by means of which a switchover of codes, which are transmitted via the transponder (5) to the reading unit (4), takes place in the transponder chip (9).

8. The safety device (1) according to claim 7, **characterised in that** the sensor (11) is a proximity switch.

9. The safety device (1) according to claim 2, **characterised in that** the transponder (5) has two transponder chips (9a, 9b) which are each connected to the sensor (11), different codes being stored in the transponder chips (9a, 9b), and **in that** if the influencing element (12) of the locking element (6) is arranged outside the area of influence of the sensor (11), a first transponder chip (9a) is selected by means of the sensor (11) so that its codes are transmitted as transponder signals to the reading unit (4), and that, if the influencing element (12) of the locking element (6) is arranged in the area of influence of the sensor (11), the second transponder chip (9b) is selected by means of the sensor (11) so that its codes are transmitted as transponder signals to the reading unit (4).

10. The safety device (1) according to claim 9, **characterised in that** the sensor (11) is a switching element which generates a binary switching signal, wherein one of the transponder chips (9a, 9b) is selected in dependence on the switching states of the switching signal.

11. The safety device (1) according to claim 10, **characterised in that** the switching element is a reed contact, a MEMS switch or a Hall sensor.

12. The safety device (1) according to one of the claims 1 to 11, **characterised in that** the sensor (11) and the influencing element (12) form a unit operating without contact.

13. The safety device (1) according to one of claims 1 to 12, **characterised in that** the influencing element (12) is a passive element without electrical connections.

14. The safety device (1) according to one of claims 1 to 12, **characterised in that** the locking element (6) is arranged in the safety switch (2) so as to be movable by means of a drive.

## Revendications

1. Dispositif de sécurité (1) avec un interrupteur de sécurité (2) et un actionneur (3) disposé de manière mobile par rapport à celui-ci, un transpondeur (5) étant disposé dans l'actionneur (3) et une unité de lecture (4) étant disposée dans l'interrupteur de sécurité (2), une position de fermeture de l'actionneur (3) étant ainsi commandée, en ce que les signaux du transpondeur (5) sont détectés dans l'unité de lecture (4), **caractérisé en ce que** l'interrupteur de sécurité (2) comporte un élément de verrouillage (6) avec un élément d'influence (12) et l'actionneur (3) comporte un capteur (11) couplé au transpondeur (5), **en ce que**, dans la position fermée de l'actionneur (3), l'élément de verrouillage (6) peut être inséré dans un logement (7) de l'actionneur (3), ce qui a pour effet d'effectuer un verrouillage de l'actionneur (3) et de commander ainsi ce verrouillage, **en ce que** l'élément d'influence (12) ne se trouve dans la sphère d'influence du capteur (11) que lorsque l'élément de verrouillage (6) est inséré dans le réceptacle (7), de sorte que ce dernier génère un signal de capteur au moyen duquel les signaux de transpondeur transmis par le transpondeur (5) sont modifiés, les signaux de transpondeur modifiés étant détectés dans l'unité de lecture (4).

2. Dispositif de sécurité (1) selon la revendication 1, **caractérisé en ce que** le transpondeur (5) comprend au moins une puce de transpondeur (9) et une bobine de transpondeur (10) en tant que composant d'un circuit résonnant de transpondeur, dans lequel sont générés des signaux de transpondeur codés avec le transpondeur (5).

3. Dispositif de sécurité (1) selon la revendication 2, **caractérisé en ce que** le capteur (11) fait partie du circuit oscillant du transpondeur, dans lequel la fréquence de résonance du circuit résonnant du transpondeur est modifiée par l'élément d'influence (12) amené dans la zone d'influence du capteur (11).

4. Dispositif de sécurité (1) selon la revendication 3, **caractérisé en ce que** l'unité de lecture (4) reçoit les signaux du transpondeur (5) sur une première fréquence porteuse lorsque l'élément de verrouillage (6) n'est pas inséré dans le réceptacle (7) de l'actionneur (3), et **en ce que** l'unité de lecture (4) du transpondeur (5) reçoit les signaux du transpondeur (5) sur une deuxième fréquence porteuse - lorsque l'élément de verrouillage (6) est inséré dans le réceptacle (7) de l'actionneur (3) et que la fréquence de résonance du circuit de résonance du transpondeur est modifiée par l'élément d'influence (12).

5. Dispositif de sécurité (1) selon la revendication 4, **caractérisé en ce que** le capteur (11) est formé par une bobine et l'élément d'influence (12) de l'élément de verrouillage (6) est formé par un matériau magnétique.

6. Dispositif de sécurité (1) selon la revendication 5, **caractérisé en ce que** le capteur (11) est formé par un condensateur.

7. Dispositif de sécurité (1) selon la revendication 2, **caractérisé en ce que** le transpondeur (5) présente une puce de transpondeur (9) avec une unité logique (13), et **en ce que** le capteur (11) est relié à une entrée (15) de la puce de transpondeur (9), dans lequel, lorsque le capteur (11) est influencé par l'élément d'influence (12), celui-ci génère un signal de capteur au moyen duquel une commutation des codes, qui sont transmis par le transpondeur (5) à l'unité de lecture (4), a lieu dans la puce de transpondeur (9).

8. Dispositif de sécurité (1) selon la revendication 7, **caractérisé en ce que** le capteur (11) est un détecteur de proximité.

9. Dispositif de sécurité (1) selon la revendication 2, **caractérisé en ce que** le transpondeur (5) présente deux puces de transpondeur (9a, 9b) qui sont chacune reliées au capteur (11), des codes différents étant mémorisés dans les puces de transpondeur (9a, 9b), et **en ce que** si l'élément d'influence (12) de l'élément de verrouillage (6) est disposé en dehors de la zone d'influence du capteur (11), une première puce de transpondeur (9a) est sélectionnée au moyen du capteur (11) de telle sorte que ses codes sont transmis sous forme de signaux de transpondeur à l'unité de lecture (4), et que, si l'élément d'influence (12) de l'élément de fermeture (6) est disposé dans la zone d'influence du capteur (11), la deuxième puce de transpondeur (9b) est sélectionnée au moyen du capteur (11) de telle sorte que ses codes sont transmis sous forme de signaux de transpondeur à l'unité de lecture (4).

10. Dispositif de sécurité (1) selon la revendication 9, **caractérisé en ce que** le capteur (11) est un élément de commutation qui génère un signal de commutation binaire, l'une des puces de transpondeur (9a, 9b) étant sélectionnée en fonction des états de commutation du signal de commutation.

11. Dispositif de sécurité (1) selon la revendication 10, **caractérisé en ce que** l'élément de commutation est un contact Reed, un commutateur MEMS ou un capteur Hall.

12. Dispositif de sécurité (1) selon l'une des revendications 1 à 11, **caractérisé en ce que** le capteur (11) et l'élément d'influence (12) forment une unité fonctionnant sans contact.

13. Dispositif de sécurité (1) selon l'une des revendications 1 à 12, **caractérisé en ce que** l'élément d'influence (12) est un élément passif sans connexions électriques.

14. Dispositif de sécurité (1) selon l'une des revendications 1 à 12, **caractérisé en ce que** l'élément de verrouillage (6) est disposé dans l'interrupteur de sécurité (2) de manière à pouvoir être déplacé au moyen d'un entraînement.
